# EUROPÄISCHE PATENTSCHRIFT

(11) **EP 2 232 672 B1**
(45) Veröffentlichungstag und Bekanntmachung des Hinweises auf die Patenterteilung: **27.04.2016**
(21) Anmeldenummer: 08864079.2
(22) Anmeldetag: 22.12.2008
(51) Int. Cl.: H02J 7/14, H02J 1/08, B60R 16/03

(54) **SCHALTUNG ZUR SPANNUNGSSTABILISIERUNG EINES BORDNETZES**
CIRCUIT FOR VOLTAGE STABILIZATION IN AN ONBOARD POWER SUPPLY
MONTAGE ÉLECTRIQUE POUR STABILISER LA TENSION D'UN RÉSEAU DE BORD

(30) Priorität: 21.12.2007 DE 102007062955
(43) Veröffentlichungstag der Anmeldung: 29.09.2010
(73) Patentinhaber: Lisa Dräxlmaier GmbH, 84137 Vilsbiburg (DE); Eberspächer Controls Landau GmbH & Co. KG, 76829 Landau in der Pfalz (DE)
(72) Erfinder: WORTBERG, Michael, 84144 Geisenhausen (DE); UHL, Günter, 74921 Helmstadt-Bargen (DE)
(74) Vertreter: Hoffmann Eitle
(86) Internationale Anmeldenummer: PCT/EP2008/068156
(87) Internationale Veröffentlichungsnummer: WO 2009/080807

(56) Entgegenhaltungen:
- EP-A- 1 520 752
- EP-A- 2 017 935
- WO-A-93/11003
- DE-A1- 19 651 612

## Beschreibung

### Gebiet der Erfindung

Die Erfindung betrifft eine Schaltung zur Spannungsstabilisierung eines Bordnetzes, die insbesondere in Kraftfahrzeugen eingesetzt werden kann.

### Stand der Technik

In modernen Kraftfahrzeug-Bordnetzen mit Kurzzeit-Hochstromverbrauchern können zeitweise Probleme bei der Stromversorgung auftreten. Zum Beispiel bei Kraftfahrzeugen, die mit einer Start-Stopp-Funktion ausgerüstet sind, die ein Abschalten des Motors beispielsweise beim Halten an einer Ampel bewirkt, um Kraftstoff zu sparen, kommt es durch den Startvorgang zu Spannungseinbrüchen. Diese Spannungseinbrüche können Funktionseinbußen bei diversen, an das Bordnetz angeschlossenen Geräten zur Folge haben. Zur Lösung dieses Problems sind aus der Technik verschiedene Ansätze bekannt.

Die EP 0 987 146 B1 offenbart ein Zweibatteriesystem, das eine Starterbatterie, die nur in der Startphase belastet wird, und eine Bordnetzbatterie zur Stromversorgung des Bordnetzes umfasst. Die Starterbatterie wird nur zum Aufladen über einen steuerbaren elektronischen Schalter, wie zum Beispiel einen MOSFET, an das Bordnetz angeschlossen, und wird ansonsten von diesem getrennt, so dass Spannungseinbrüche in der Startphase keinen Einfluss auf das Bordnetz haben.

Des Weiteren ist aus der DE 103 01 528 A1 ein Bordnetz zur Versorgung eines Hochleistungsverbrauchers bekannt. Das erfindungsgemäße Bordnetz umfasst zwei Energiespeicher und eine steuerbare Lade- und Trenneinheit. Die Lade- und Trenneinheit ermöglicht die Verbindung des ersten und/oder zweiten Energiespeichers mit dem Hochleistungsverbraucher, sowie eine Verbindung des zweiten Energiespeichers mit dem Bordnetz. Um den problemlosen Betrieb des Hochleistungsverbrauchers zu gewährleisten, wird zum Beispiel in der Motorstartphase der für den Motorstart verwendete erste Energiespeicher von dem Hochleistungsverbraucher abgekoppelt, und dieser ausschließlich von dem zweiten Energiespeicher versorgt. Auf diese Weise wird der Hochleistungsverbraucher von Spannungseinbrüchen im übrigen Bordnetz isoliert. Ein ähnliches Schaltsystem wird in der DE 103 45 310 A1 offenbart, wobei die trennbare Verbindung zwischen dem zweiten Energiespeicher und dem Hochleistungsverbraucher hierin durch zwei gegensinnig in Serie geschaltete Feldeffekttransistoren erreicht wird.

Ferner existieren technische Ansätze, eine für den Motorstart genutzte Starterbatterie im Moment des Starts durch ein erstes Trennrelais vom Bordnetz zu trennen. Für die Zeit des Starts wird das Bordnetz dann durch eine zweite Batterie (Stützbatterie) gestützt, die dem Bordnetz vor dem Start über ein zweites Trennrelais zugeschaltet wird. Bei solch einem Schaltungssystem ist im normalen Betriebszustand des Kraftfahrzeugs das erste Trennrelais geschlossen und das zweite Trennrelais geöffnet, so dass das Bordnetz über die Starterbatterie versorgt wird. Diese Energieversorgung wird auch bei einem Stopp des Fahrzeugs beibehalten. Wird das Fahrzeug wieder gestartet, so wird zunächst das zweite Trennrelais zum Anschluss der Stützbatterie geschlossen und anschließend das erste Trennrelais geöffnet, so dass das Bordnetz ausschließlich über die Stützbatterie versorgt wird. Wenn danach der Motor mit Hilfe der Starterbatterie gestartet wird, so ist der Spannungsabfall in der Starterbatterie durch das geöffnete erste Trennrelais von dem Bordnetz getrennt. Nach erfolgtem Start wird das erste Trennrelais geschlossen und das zweite Trennrelais geöffnet, wodurch das Bordnetz komplett über die Starterbatterie mit Energie versorgt wird und das Fahrzeug somit in den normalen Betriebszustand übergeht.

Die EP-A-2 017 935 offenbart einen Trennschalter zur Trennung eines Kfz-Bordnetzes in zwei Bereiche, mit dem bei einer plötzlich auftretenden Belastungsspitze im ersten Bereich ein Spannungsabfall im zweiten Bereich verhindert werden kann. Der Trennschalter enthält einen Halbleiterschalter und überwacht den Strom oder die Spannung über den Halbleiterschalter. Sobald eine Stromumkehr oder Spannungsunterschreitung, die zu einem Stromfluss aus dem zweiten Bereich in der ersten Bereich führt, detektiert wird, wird der Halbleiterschalter geöffnet, um so einen Spannungseinbruch im zweiten Bereich zu verhindern. Somit wird ein autonom schaltender Trennschalter zur Verfügung gestellt, der auch auf spontan auftretende Belastungsspitzen reagieren kann.

### Darstellung der Erfindung

Der Erfindung liegt die Aufgabe zugrunde, eine zuverlässige und schnelle Schaltung zur Spannungsstabilisierung eines Bordnetzes, insbesondere für Kraftfahrzeuge, zu entwickeln.

Diese Aufgabe wird durch eine Schaltung zur Spannungsstabilisierung eines Bordnetzes mit den Merkmalen des Anspruchs 1 und durch ein Kraftfahrzeug mit den Merkmalen des Anspruchs 12 gelöst. Vorteilhafte Ausführungsformen folgen aus den übrigen Ansprüchen.

Die Aufgabe wird dadurch gelöst, dass die Schaltung zur Spannungsstabilisierung eines Bordnetzes, insbesondere für Kraftfahrzeuge, die in elektrischer Verbindung zwischen dem zu stabilisierenden Bordnetz und einem ersten Energiespeicher angeordnet ist, folgende Komponenten umfasst: ein Diodenelement, das einen einzelnen Halbleiterschalter oder mehrere parallel geschaltete Halbleiterschalter beinhaltet, eine Kontroll- und Steuerschaltung, welche die Stärke eines durch das Diodenelement fließenden Stroms bestimmt und entsprechend der bestimmten Stromstärke den oder die Halbleiterschalter des Diodenelements steuert und einen mit dem Diodenelement elektrisch verbundenen und dem Bordnetz elektrisch verbindbaren zweiten Energiespeicher. Der Ausdruck "Diodenelement" bezeichnet hierin ein Schaltungselement, das die Funktion einer Diode erfüllt, d.h. Stromdurchfluss durch das Element nur in einer Richtung ermöglicht. Für die Halbleiterschalter des Diodenelements können vorteilhafterweise Leistungshalbleiter verwendet werden, d.h. Halbleiterbauelemente, die die für hohe Ströme (z. B. > 40 A) ausgelegt sind. Bei der Schaltung der

Erfindung übernimmt das Diodenelement die Funktion des oben beschriebenen ersten Trennrelais, indem es dafür sorgt, dass ein an dem ersten Energiespeicher auftretender Spannungseinbruch (zum Beispiel beim Startvorgang in einem Kraftfahrzeug) nicht auf das Bordnetz zurückwirkt. In diesem Fall kann kein Strom von dem zweiten Energiespeicher oder dem Bordnetz zu dem ersten Energiespeicher fließen, da diese Richtung der Sperrrichtung des Diodenelements entspricht.

Der erste Energiespeicher ist somit einseitig von dem Bordnetz entkoppelt, wobei diese Entkopplung automatisch und ohne zeitliche Verzögerung erfolgt. Das Diodenelement arbeitet autonom und bedarf keiner Ansteuerung von außen, z.B. durch ein weiteres Steuergerät (Bodycontroller oder Energie-Management-Controller). Während des Spannungseinbruchs wird das Bordnetz über den zweiten Energiespeicher versorgt, so dass eine ausreichende Stromversorgung gewährleistet ist. Wegen der zum Beispiel im Bordnetz eines Kraftfahrzeuges aufkommenden hohen Stromlast von bis zu 200 A, können keine konventionellen Dioden, wie zum Beispiel pn- oder Schottky-Dioden, als Diodenelement der Erfindung verwendet werden. Aufgrund der Diodendurchlassspannung würde in diesem Fall eine zu große Verlustleistung in der Diode anfallen. Das Diodenelement umfasst deshalb einen Halbleiterschalter oder eine Parallelschaltung von mehreren Halbleiterschaltern.

Die Halbleiterschalter werden durch die Kontroll- und Steuerschaltung, die den durch das Diodenelement fließenden Strom bestimmt, derart angesteuert, dass sie einen Stromfluss von dem ersten Energiespeicher in das Bordnetz zulassen, in der Gegenrichtung jedoch sperren. Durch die Verwendung von Halbleiterschaltern anstelle von Trennrelais, die als elektromechanische Bauelemente Abnutzungserscheinungen unterliegen, wird eine hohe Zyklenfestigkeit und außerdem eine schnelle Ansprechzeit garantiert.

Die Schaltung weist somit eine hohe Lebensdauer auf und verhindert Verzögerungen zum Beispiel beim Startvorgang eines Kraftfahrzeugs. Da durch die Verwendung eines Diodenelements der Stromfluss von dem ersten Energiespeicher in das Bordnetz nicht unterbrochen wird, weil das Diodenelement in dieser Richtung leitet, ist keine aufwändige Energieversorgungsabsicherung für das Bordnetz notwendig. Wird die Schaltung im Bordnetz eines Kraftfahrzeugs eingesetzt, bei dem ein Starter zum Starten des Motors und ein über den Motor betriebener Stromgenerator vorgesehen sind, ergibt sich außerdem folgender Vorteil. Da bei der vorliegenden Schaltung ein unbeabsichtigtes Trennen der elektrischen Verbindung von dem ersten Energiespeicher zu dem Bordnetz (wie es zum Beispiel im Fall des oben beschriebenen ersten Trennrelais bei einem Soft- oder Hardwarefehler in der Steuerung vorkommen kann) nicht möglich ist, kann der für die Stromversorgung des Bordnetzes benötigte Generator in elektrischer Verbindung vor dem Diodenelement (also so, dass das Diodenelement zwischen Generator und Bordnetz liegt) nahe bei dem ersten Energiespeicher angeordnet werden. Solch ein Aufbau ist besonders bei einem integrierten Starter/Generator-Element vorteilhaft, bei dem eine wie oben beschriebene Schaltung mit zwei Trennrelais nicht möglich wäre, da in diesem Fall bei fehlerhafter Öffnung des Trennrelais das Bordnetz nicht mehr über den Generator mit Strom versorgt würde. Des Weiteren werden bei der Schaltung der Erfindung hohe Ausgleichsströme von dem zweiten Energiespeicher zu dem ersten Energiespeicher, zum Beispiel während des Startvorgangs eines Kraftfahrzeugs, vermieden, da das Diodenelement in dieser Richtung sperrt. Somit wird eine unerwünschte Entladung des zweiten Energiespeichers und eine mögliche Beschädigung der Schaltung verhindert.

Das Diodenelement umfasst eine diskret aufgebaute Kontroll- und Steuerschaltung. Diese kann die Stromrichtung über das Diodenelement erkennen. Die Steuerschaltung schaltet die Halbleiterschalter durch für einen Stromfluss in Durchlassrichtung. Ist im Moment des Zuschaltens die Spannung des zweiten Energiespeichers (z.B. einer Stützbatterie) höher als die des ersten Energiespeichers (z.B. einer Starterbatterie), so dient die Diodenfunktion der Kontroll- und Steuerschaltung zur Vermeidung einer Umkehrung der Stromrichtung. Der Nulldurchgang des Stromes bei der Stromumkehr wird durch die Kontroll- und Steuerschaltung erkannt und die Halbleiterschalter werden durch die Kontroll- und Steuerschaltung gesperrt, so dass kein Strom in die Sperrrichtung fließen kann.

Ferner umfasst das Diodenelement eine parallel zu dem oder den Halbleiterschaltern geschaltete Diode, insbesondere eine Schottky-Diode. Somit konnen geringe Ströme (zum Beispiel I<10 A im Fall eines Kraftfahrzeug-Bordnetzes) von dem ersten Energiespeicher über die Diode in das Bordnetz fließen, selbst wenn die Halbleiterschalter geöffnet sind. Über die Kontroll- und Steuerschaltung kann die Stärke des durch die Diode fließenden Stroms bestimmt werden, und wenn diese einen vorgegebenen ersten Schwellwert übersteigt, können die Halbleiterschalter von der Kontroll- und Steuerschaltung geschlossen werden. Der über dem ersten Schwellwert liegende Strom fließt dann über die Diode und die parallel geschalteten Halbleiterschalter, wodurch ein hoher Leistungsverlust an der Diode vermieden wird. Sinkt der Strom unter einen vorgegebenen zweiten Schwellwert, der von dem ersten Schwellwert verschieden sein kann, so wird dies von der Kontroll- und Steuerschaltung erkannt, und dementsprechend werden die Halbleiterschalter geöffnet. Der unter dem Schwellwert liegende Strom fließt dann komplett über die Diode.

Vorzugsweise ist der zweite Energiespeicher eine über eine Schalteinheit angeschlossene Batterie. Die Batterie kann dann bei Auftreten eines Spannungseinbruchs am ersten Energiespeicher, zum Beispiel beim Startvorgang eines Kraftfahrzeugs, über die Schalteinheit an das Bordnetz angeschlossen werden, um dieses mit Strom zu versorgen. Als Steuersignal für die Schalteinheit kann im Fall eines Kraftfahrzeug-Motorstarts hierbei das Klemme 50-Signal des Zündschlosses benutzt werden.

In einer bevorzugten Ausführungsform umfasst diese Schalteinheit zwei gegensinnig in Serie geschaltete Halbleiterschalter (insbesondere Leistungshalbleiter-Schalter), vorzugsweise Feldeffekt-Transistoren. Das Zuschalten der Batterie kann somit schnell und unkompliziert durch das Schließen der Halbleiterschalter erfolgen. Hierfür bieten sich besonders Feldeffekt-Transistoren, insbesondere Metalloxid-Halbleiter-Feldeffekt-Transistoren (MOSFETs), an, die über niedrige Gate-Spannungen mit minimaler Verzögerung schaltbar sind. Eine gegensinnige Serienschaltung der Halbleiterschalter bezeichnet hierin eine Anordnung, bei der die Durchlassrichtungen der intrinsischen Dioden der beiden Halbleiterschalter einander entgegengesetzt sind, so dass bei geöffneten Schaltern kein Stromfluss von der Batterie zum Bordnetz oder in die entgegengesetzt Richtung möglich ist. Bei Feldeffekttransistoren entspricht dies einer Polung, bei der die Source des ersten Transistors der Source des zweiten Transistors gegenüber liegt, oder bei der die Drain des ersten Transistors der Drain des zweiten Transistors gegenüber liegt.

Vorzugsweise beinhaltet die Schaltung zur Spannungsstabilisierung ferner einen Mikro-Controller zur Steuerung der Halbleiterschalter der Schalteinheit. In diesem Fall kann das Zuschalten der Batterie gesteuert werden, indem der Mikro-Controller die Spannung und den zeitlichen Spannungsabfall über die Halbleiterschalter der Schalteinheit bestimmt, diese mit vorgegebenen Werten vergleicht und ggf. die Halbleiterschalter schließt. Somit ist keine Ansteuerung von außen, wie zum Beispiel das Klemme 50-Signal bei einem Kraftfahrzeug-Motorstart, notwendig. Liegt zum Beispiel die Spannung unterhalb der in einem Kraftfahrzeug-Bordnetz üblichen 12V und tritt ein Spannungseinbruch mit einer Spannungsänderung von 1V/ms auf, so wird die Batterie zugeschaltet und stützt das Bordnetz. Dieses autonome Zuschalten der Batterie wäre nicht mit einem Relais möglich, da dieses eine zu lange Schaltdauer aufweist und deshalb die Spannung zu weit einbrechen würde, bevor eine Stützung des Bordnetzes über die Batterie erfolgt. Da das Diodenelement ebenfalls autonom arbeitet, kann der Stabilisierungsvorgang des Bordnetzes ohne zusätzliche Ansteuerung von außen durchgeführt werden, was einen vereinfachten Aufbau der Schaltung und verkürzte Ansprechzeiten ermöglicht. Vorzugsweise weist der Mikro-Controller ferner eine Einrichtung oder Funktionalität zur Überwachung der Temperatur des oder der Halbleiterschalter des Diodenelements auf. Im Fall einer Übertemperatur kann somit eine Fehlermeldung ausgegeben und die Energieversorgung entsprechend gesteuert werden. Bei drohendem Ausfall der Halbleiterschalter des Diodenelements könnte zum Beispiel im Fall eines Kraftfahrzeug-Bordnetzes die Energieversorgung in einen "Limp-Home"-(d.h. Notlauf-)Betrieb umgestellt werden, bei dem nur noch die für den Betrieb des Kraftfahrzeugs unbedingt notwendigen Elemente mit Strom versorgt werden.

Vorzugsweise umfasst die Schaltung ferner eine Einrichtung zur Überprüfung des Ladezustands der Batterie, beispielsweise durch Messung der Impedanz der Batterie. Erreicht der Ladezustand einen vorgegeben kritischen Punkt, so kann die Batterie aus dem ersten Energiespeicher, oder im Fall eines Kraftfahrzeugs über den Generator, wieder aufgeladen werden.

In einer weiteren Ausführungsform kann anstelle einer Batterie auch ein Superkondensator (Super-Cap) als zweiter Energiespeicher verwendet werden. Superkondensatoren sind Doppelschicht-Kondensatoren, die als Energiespeicher mit hoher Speicherdichte eingesetzt werden können, und Kapazitätswerte von einigen Farad bis hin zu mehreren tausend Farad aufweisen können. Superkondensatoren können Energie in kürzester Zeit speichern und wieder abgeben und können somit schnell auf Spannungsschwankungen im Bordnetz reagieren. Da sich der Superkondensator von selbst entlädt, wenn die Spannung im Bordnetz unter die über dem Kondensator aufgebaute Spannung abgefallen ist, wird keine Schalteinheit zur Verbindung des Superkondensators mit dem Bordnetz benötigt. Es ist lediglich notwendig, den Kondensator so zu konzipieren, dass bei voller Ladung des Kondensators die aufgebaute Spannung in etwa der Betriebsspannung des Bordnetzes entspricht. In Ruhe- oder Normalbetriebsphasen, in denen die Stromversorgung des Bordnetzes von dem ersten Energiespeicher übernommen wird, kann der Superkondensator wieder über den ersten Energiespeicher, oder im Fall eines Kraftfahrzeugs über den Generator, aufgeladen werden.

Die Halbleiterschalter des Diodenelements sind Feldeffekt-Transistoren, insbesondere Metalloxid-Halbleiter-Feldeffekt-Transistoren (MOSFETs), zum Beispiel Leistungs-MOSFETs. Da sich Feldeffekt-Transistoren mit geringen Gate-Spannungen und minimaler Zeitverzögerung schalten lassen, kann somit schnell auf Änderungen des Stromflusses über das Diodenelement reagiert werden. Die parallel geschalteten Feldeffekt-Transistoren können so angeordnet werden, dass die Durchlassrichtung ihrer intrinsischen Dioden der Richtung von dem ersten Energiespeicher zu dem Bordnetz entspricht. Somit ist sichergestellt, dass, wenn die Transistoren gesperrt sind, kein Stromfluss von dem zweiten Energiespeicher zu dem ersten Energiespeicher erfolgen kann. Andererseits kann, auch bei gesperrten Transistoren, ein Teil des von dem ersten Energiespeicher zu dem Bordnetz fließenden Stroms durch die intrinsischen Dioden der Feldeffekt-Transistoren getragen werden. Steigt der Stromfluss über die intrinsischen Dioden über einen vorgegebenen Schwellwert an, so dass die Leistungsverluste über die Dioden zu groß werden, und somit die Gefahr der Zerstörung der Feldeffekt-Transistoren besteht, so werden die Transistoren über das Kontroll- und Steuerelement leitend geschaltet. Bricht die Spannung an der ersten Energiequelle zum Beispiel beim Startvorgang eines Kraftfahrzeugs ein, so wird ein Stromfluss von der zugeschalteten zweiten Energiequelle zu der ersten Energiequelle verhindert, indem die Transistoren gesperrt werden.

In einer weiteren Ausführungsform ist die Schaltung zur Spannungsstabilisierung des Bordnetzes in elektrischer Verbindung zwischen dem zu stabilisierenden Bordnetz und einem oder mehreren mit einem ersten Energiespeicher verbundenen Hochstromverbrauchern angeordnet. Der erste Energiespeicher kann somit z.B. mehrere Hochstromverbraucher gleichzeitig oder nacheinander mit Energie versorgen, so dass deren Funktionalität gesichert ist, wobei Spannungseinbrüche im Bordnetz durch die Schaltung der Erfindung vermieden werden.

Vorzugsweise ist einer der Hochstromverbraucher eine Start-Stopp-Funktion oder ein EPS-System (Electromechanic Powerassisted Steering; Servolenkung) oder eine elektrohydraulische Bremse. Der erste Energiespeicher kann hierbei auch für die Stromversorgung einer Kombination (oder aller) der obigen Komponenten verwendet werden. Während die Funktionsweise und die Vorteile der Erfindung bisher im Wesentlichen für den beispielhaften Fall einer Start-Stopp Funktion eines Kraftfahrzeugs als Hochstromverbraucher beschrieben wurde, ist sie nicht auf eine solche Verwendung beschränkt, sondern kann für jede Art von Schaltsystem, insbesondere solche, die einen Hochstromverbraucher aufweisen, eingesetzt werden.

Des Weiteren betrifft die Erfindung ein Kraftfahrzeug, insbesondere ein Automobil, das eine Schaltung zur Spannungsstabilisierung eines Bordnetzes der Erfindung aufweist. Kraftfahrzeug-Schaltsysteme umfassen im Allgemeinen eine Reihe von Hochstromverbrauchern, wie zum Beispiel einen Starter, eine elektrohydraulische Bremse, eine Servolenkung (EPS) usw. Da über das Kraftfahrzeug-Bordnetz Steuer- und Kontrollgeräte mit Strom versorgt werden, die für den sicheren Betrieb des Fahrzeugs unerlässlich sind, muss eine gesicherte Stromversorgung des Bordnetzes zu jeder Zeit gewährleistet werden, unabhängig von eventuellen Spannungseinbrüchen an den Hochstromverbrauchern. Diese Aufgabe wird von der Erfindung erfüllt, wobei keine Ansteuerung von außen, z.B. durch ein weiteres Steuergerät (Bodycontroller oder Energie-Management Controller), notwendig ist, was einen einfachen Aufbau und Betrieb des Kraftfahrzeug-Schaltsystems ermöglicht. Zum Beispiel kann die Schaltung der Erfindung für den Einbau in ein Automobil als Elektronikmodul in den Hauptstromverteiler integriert werden. Dieser Stromverteiler enthält Stanzgitter zum Verteilen des Generator- und Batterie-Stroms sowie Schmelzsicherungen zum Absichern der Leitungen. Wenn die Halbleiterschalter des Diodenelements zum Beispiel als MOSFETs mit intrinsischer Diodendurchlassrichtung vom ersten Energiespeicher in das Bordnetz ausgelegt sind, so ist ein Schutz der Transistoren bei Kurzschluss in dieser Stromrichtung durch Abschalten nicht möglich. Die Absicherung dieses Leitungspfades kann dann über eine Schmelzsicherung des Hauptstromverteilers ermöglicht werden. Die Auslegung der MOSFETs muss dann derart erfolgen, dass der Kurzschlussstrom der größten nachfolgenden Schmelzsicherung getragen werden kann.

### Kurze Beschreibung der Zeichnungen

Nachfolgend wird die Erfindung rein beispielhaft anhand der beigefügten Figuren beschrieben, wobei:
- Fig. 1: einen Schaltplan einer aus der Technik bekannten Schaltung zur Spannungsstabilisierung eines Bordnetzes zeigt;
- Fig. 2: einen Schaltplan einer Schaltung zur Spannungsstabilisierung eines Bordnetzes gemäß einer ersten Ausführungsform zeigt;
- Fig. 3: einen Schaltplan des Diodenelements der Schaltung zur Spannungsstabilisierung eines Bordnetzes der in Fig. 2 gezeigten ersten Ausführungsform zeigt;
- Fig. 4: einen Schaltplan einer Schaltung zur Spannungsstabilisierung eines Bordnetzes gemäß einer zweiten Ausführungsform zeigt; und
- Fig. 5: den zeitlichen Spannungsverlauf an einem Bordnetz ohne Spannungsstabilisierung und mit Spannungsstabilisierung durch die in Fig. 4 gezeigte Schaltung der zweiten Ausführungsform zeigt.

### Wege zur Ausführung der Erfindung

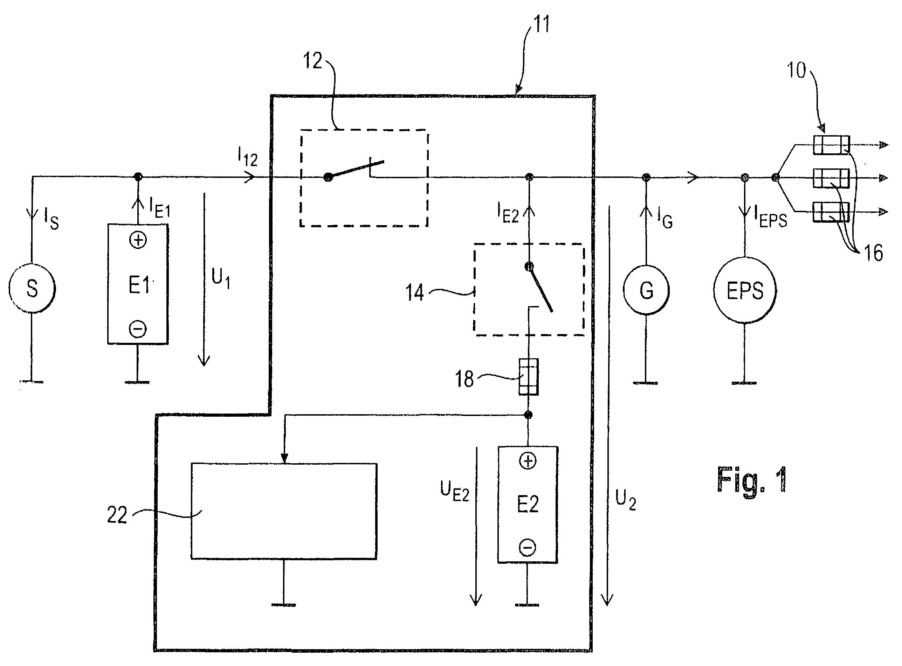

Fig. 1 zeigt einen Schaltplan einer aus der Technik bekannten Schaltung 11 zur Spannungsstabilisierung eines Kraftfahrzeug-Bordnetzes 10, das der Energieversorgung von Stromverbrauchern 16, wie z. B. Steuer- und Kontrollgeräten, dient. Die Schaltung 11 ist in elektrischer Verbindung zwischen dem zu stabilisierenden Bordnetz 10 und einem mit der ersten Energiequelle E1 (in diesem Fall eine Batterie) verbundenen Starter S angeordnet ist. Der Starter S dient zum Starten eines Verbrennungsmotors in einem Kraftfahrzeug. Des Weiteren sind zwischen der Schaltung 11 und dem Bordnetz 10 ein EPS-System (EPS; Servolenkung) und ein von dem Verbrennungsmotor angetriebener Generator G zur Stromerzeugung angeschlossen. Die Schaltung 11 umfasst ein erstes Trennrelais 12, ein zweites Trennrelais 14, eine Sicherung 18 und einen zweiten Energiespeicher E2 (in diesem Fall eine Batterie), der über das Trennrelais 14 und die Sicherung 18 mit dem Bordnetz 10 verbunden ist. Der Ladezustand der Batterie E2 wird beispielsweise durch eine Einrichtung zur Impedanzmessung 22 überprüft.

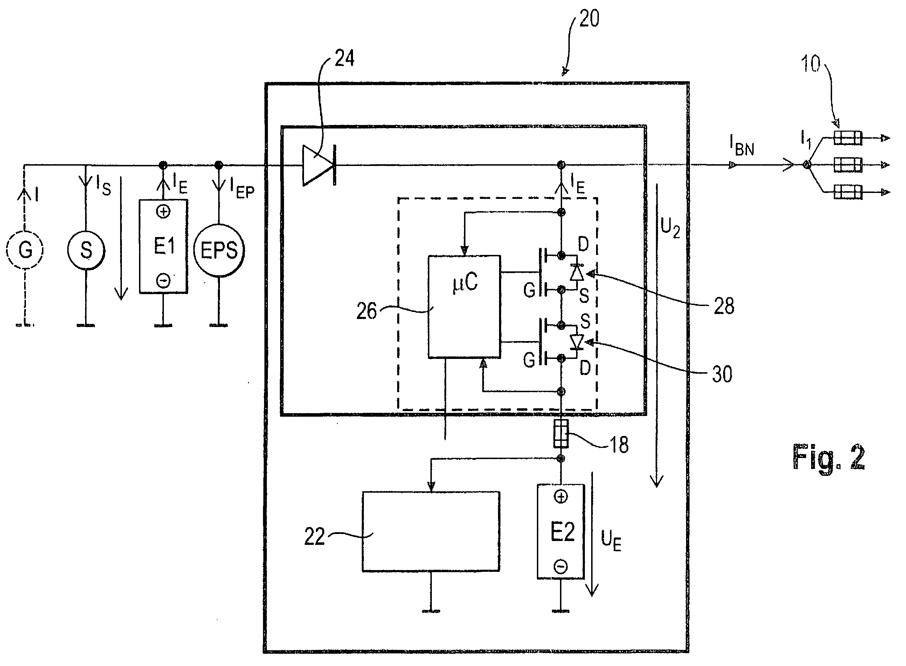

Fig. 2 zeigt eine Schaltung 20 zur Spannungsstabilisierung eines Bordnetzes 10 gemäß einer ersten Ausführungsform , die in elektrischer Verbindung zwischen zwei mit einem ersten Energiespeicher E1 (in dieser Ausführungsform eine Batterie) verbundenen Hochstromverbrauchern (Starter S und EPS-System eines Kraftfahrzeugs) und dem zu stabilisierenden Bordnetz 10 angeordnet ist. Die Schaltung 20 umfasst ein Diodenelement 24, einen Mikro-Controller 26, zwei gegensinnig in Serie geschaltete Leistungs-MOSFETs 28, 30, eine Sicherung 18 und einen über die Sicherung 18 und die zwei Leistungs-MOSFETs 28, 30 mit dem Bordnetz 10 verbundenen zweiten Energiespeicher E2 (in dieser Ausführungsform eine Batterie). Der Ladezustand der zweiten Batterie E2 wird durch eine Einrichtung zur Impedanzmessung 22 überwacht. Der Mikro-Controller 26 dient dazu, die an die Gates G der Leistungs-MOSFETs 28, 30 angelegten Spannungen zu steuern, und somit die MOSFETs 28, 30 gezielt zu schalten. Des Weiteren misst der Mikro-Controller 26 die Spannung und den zeitlichen Verlauf der Spannung über den beiden MOSFETs 28, 30.

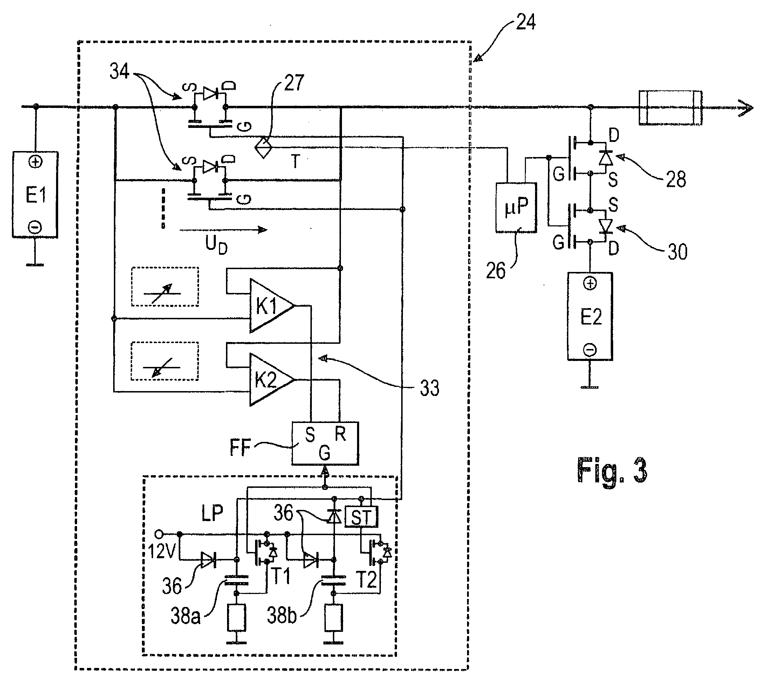

Fig. 3 zeigt einen Schaltplan des Diodenelements 24 gemäß der in Fig. 2 gezeigten ersten Ausführungsform. Das Diodenelement 24 umfasst sechs parallel zu der Diode geschaltete Leistungs-MOSFETs 34, von denen in Fig. 3 jedoch nur zwei gezeigt sind. Die MOSFETs 34 weisen einen Einschaltwiderstand von wenigen mOhm auf und sind so ausgelegt, dass problemlos ein Strom von 200 A über die Parallelschaltung der sechs MOSFETs 34 fließen kann. In diesem Fall trüge jeder MOSFET 34 einen Strom von 33 A, so dass sowohl Spannungsabfall (33 mV) als auch Verlustleistung (1,1 W) über die Transistoren 34 unkritisch wären. Des Weiteren ist in Fig. 3 eine Kontroll- und Steuerschaltung 33 gezeigt, die zwei Komparatoren K1 und K2, ein Flip-Flop-Element FF, und eine Ladungspumpe LP umfasst. Die Ladungspumpe LP beinhaltet einen Schmitt-Trigger ST, zwei Kondensatoren 38a und b, drei Dioden 36 und zwei MOSFETs T1, T2. Des Weiteren ist der Mikro-Controller 26 mit einer Einrichtung 27 zur Temperaturmessung der Leistungs-MOSFETs 34 versehen. Als Absicherung gegen den Fall, dass die Beschaltung bestehend aus Komparatoren K1, K2 und Flip-Flop-Element FF ausfällt, kann diese zum Beispiel zweifach ausgeführt werden, mit zwei Bänken aus parallel geschalteten Halbleiterschaltern (z. B. im vorliegenden Fall 2 Bänke mit jeweils 3 MOSFETs).

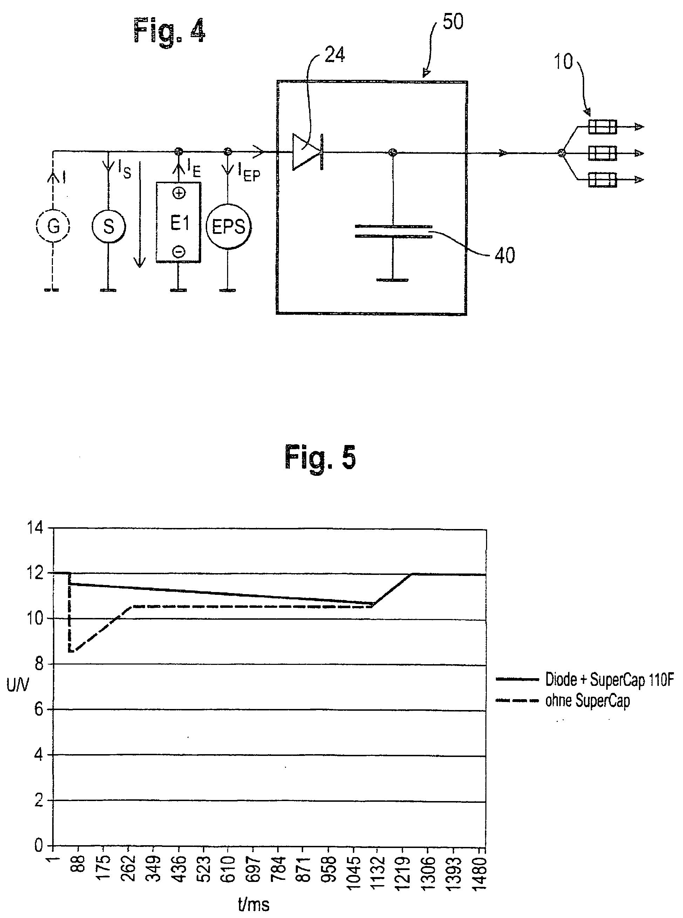

Fig. 4 zeigt einen Schaltplan einer Schaltung 50 zur Spannungsstabilisierung eines Bordnetzes 10 gemäß einer zweiten Ausführungsform. Die Schaltung 50 umfasst ein Diodenelement 24, das wie in Fig. 3 gezeigt aufgebaut ist, und einen Superkondensator 40 (Super-Cap) mit einer Kapazität von 110 F.

Wie oben erläutert ist bei der Schaltung 20, 50 eine Anordnung des Stromgenerators G vor dem Diodenelement 24 (links von dem Diodenelement 24 in Figuren 2 und 4) möglich, da eine unbeabsichtigte Unterbrechung des Stromflusses von dem Generator G zu dem Bordnetz 10 durch das Diodenelement 24 nicht möglich ist (im Gegensatz zu der in Fig. 1 gezeigten Schaltung 11 mit Trennrelais 12). Somit kann die vorliegende Schaltung 20, 50 auch in Kraftfahrzeugen verwendet werden, bei denen Starter S und Generator G als integrierte Einheit ausgebildet sind.

Im Folgenden wird die Funktionsweise der aus der Technik bekannten Schaltung und der Schaltung der Ausführungsformen anhand von Figuren 1 bis 4 erläutert.

Bei der in Fig. 1 gezeigten, aus der Technik bekannten Schaltung 11 ist im normalen Betriebzustand des Kraftfahrzeugs das Trennrelais 12 geschlossen und das Trennrelais 14 geöffnet. Somit wird das Bordnetz 10 über die erste Batterie E1 und den Generator G mit Strom versorgt. Diese Stromversorgung wird beibehalten, wenn sich das Kraftfahrzeug im Stopp-Zustand befindet. Beim Start wird das zweite Trennrelais 14 geschlossen und danach das erste Trennrelais 12 geöffnet, so dass das Bordnetz 10 über die zweite Batterie E2 mit Strom versorgt wird. Wenn nun der Motor über den Starter S mit der ersten Batterie E1 gestartet wird, so ist der Spannungsabfall in der Batterie E1 über das geöffnete erste Trennrelais 12 vom Bordnetz 10 getrennt. Nachdem der Motorstart erfolgt ist, wird das erste Trennrelais 12 wieder geschlossen und das zweite Trennrelais 14 geöffnet. Bei solch einem Schaltungsaufbau können die oben bereits beschriebenen Probleme auftreten. Die Schaltung 20 der ersten Ausführungsform löst diese Probleme auf die folgende Weise.

Befindet sich das Kraftfahrzeug im Ruhezustand, so fließt der geringe Bordnetzstrom (<∼5A) über die intrinsischen Dioden der Leistungs-MOSFETs 34 (siehe Fig. 3). Steigt der Strom über einen vorgegebenen Schwellwert (ungefähr 5A) an, so schaltet der Komparator K1 der Kontroll- und Steuerschaltung 33 wegen der Überschreitung der über den intrinsischen Dioden 34 abfallenden Schwellspannung U_{D} auf 1. Das nachfolgende Flip-Flop FF mit kurzer Gatterlaufzeit wird auf 1 gesetzt. Das auf 1 gesetzte Flip-Flop FF aktiviert die Ladungspumpe LP. Da bei einem Stromanstieg die Leistungs-MOSFETs 34 sehr schnell durchgeschaltet werden müssen, um eine Beschädigung oder Zerstörung der intrinsischen Dioden der MOSFETs zu verhindern, ist eine extrem kurze Ansprechzeit der Ladungspumpe LP notwendig. Diese kann zum Beispiel dadurch erreicht werden, dass ein geladener Kondensator 38a über einen Transistor T1 auf die Betriebsspannung des Bordnetzes 10 gehoben wird, um die Gates G der Leistungs-MOSFETs 34 durchzuschalten. Parallel dazu kann über einen Schmitt-Trigger ST und einen zweiten über den Transistor T2 geschalteten Kondensator 38b ein kontinuierliches Ladungspumpen erfolgen, um einem Spannungsabfall auf der Gate-Leitung durch Leckströme entgegen zu wirken. Die über den intrinsischen Dioden abfallende Spannung sinkt unter die Schwellspannung des Komparators K1, wodurch der Komparatorausgang wieder auf null zurückgeht. Die Gates G der Leistungs-MOSFETs 34 bleiben aber durchgeschaltet, da das Flip-Flop FF den Zustand 1 beibehält. Die Sperren der Leistungshalbleiter bei Stromumkehr erfolgt über den Komparator K2. Dieser erkennt den Nulldurchgang der Spannung über die Leistungshalbleiter, wenn der Strom über die Leistungshalbleiter seinen Null-Durchgang hat. Bei der Spannung 0V geht der Ausgang des Komparators K2 auf 1 und setzt das Flip-Flop zurück. Mit diesem Übergang des Ausgangs des Flip-Flops werden die Transistoren T1 und T2 ausgeschaltet. Die über die Kondensatoren 38a und 38b an die Gates G der Leistungs-MOSFETs 34 angelegte Spannung geht somit auf Null zurück und die Leistungs-MOSFETs 34 werden gesperrt. Somit nimmt außer dem Komparator K2 kein Schaltungsteil mehr Ruhestrom auf. Da die Leistungs-MOSFETs 34 gesperrt sind und die Durchlassrichtung der der intrinsischen Dioden der Leistungs-MOSFETs 34 der Stromrichtung von der ersten Batterie E1 zu der zweiten Batterie E2 entspricht, wird eine Umkehrung des Stroms, d.h. ein Stromfluss von der zweiten Batterie E2 zur ersten Batterie E1, unterbunden. Das Diodenelement 24 wirkt somit wie eine Diode, aber ohne die Verluste über die Durchlassspannung wie bei konventionellen pn- oder Schottky-Dioden.

Das Zuschalten der zweiten Batterie E2 an das Bordnetz kann automatisch beim Starten des Motors über das Klemme 50-Signal erfolgen. Des Weiteren besteht aber auch die Möglichkeit, durch den Mikro-Controller 26 die Spannung und den zeitlichen Spannungsabfall über die Leistungs-MOSFETs 28, 30 zu bestimmen (siehe Fig. 2). Fällt die Spannung unter die normale Betriebsspannung des Bordnetzes ab und übersteigt der zeitliche Spannungsabfall einen vorgegebenen Wert, wie z.B. 1 V/ms, so können die Leistungs-MOSFETs 28, 30 automatisch über den Mikro-Controller 26 durchgeschaltet werden, so dass das Bordnetz 10 über die zweite Batterie E2 mit Strom versorgt wird.
Wird statt einer zweiten Batterie E2 ein Superkondensator 40 verwendet, so wird keine weitere Schalteinheit zum Zuschalten des zweiten Energiespeichers benötigt. In dieser in Fig. 4 dargestellten zweiten Ausführungsform weist das Diodenelement 24 die oben beschriebene Funktionsweise und den in Fig. 3 gezeigten Aufbau auf. Der Superkondensator 40 ist voll aufgeladen und weist eine Spannung auf, die mit der Betriebsspannung des Bordnetzes 10 übereinstimmt. Fällt die Spannung des Bordnetzes 10 unter diesen Wert ab, so entsteht ein Potentialgefälle zwischen dem Bordnetz 10 und dem Superkondensator 40, der sich somit automatisch entlädt. Dadurch wird das Bordnetz 10 durch den Superkondensator 40 mit Strom versorgt und somit ein Spannungseinbruch an der ersten Batterie E1 kompensiert. Ist die Phase des Spannungseinbruchs (z. B. die Startphase des Motors) abgeschlossen, so kann der Superkondensator 40 über den Generator G oder die erste Batterie E1 wieder voll aufgeladen werden.

Die Glättung des Spannungseinbruchs im Bordnetz 10 beim Start eines Kraftfahrzeugs durch eine Schaltung 50 der zweiten Ausführungsform der Erfindung wird in Fig. 5 gezeigt. Sobald die Spannung im Bordnetz 10 durch den Startvorgang abfällt, wird dem Bordnetz durch den Superkondensator 40 Strom zugeführt. Dadurch kann der Spannungseinbruch aufgefangen werden, und ein, verglichen mit einem Bordnetz 10 ohne die Schaltung 50 der zweiten Ausführungsform, glatteres Spannungsprofil erreicht werden. Eine ausreichende Stromversorgung aller Komponenten des Bordnetzes 10 ist somit zu jeder Zeit gewährleistet.

## Patentansprüche

1. Schaltung (20, 50) zur Spannungsstabilisierung eines Bordnetzes (10), insbesondere für Kraftfahrzeuge, die in elektrischer Verbindung zwischen dem zu stabilisierenden Bordnetz und einem ersten Energiespeicher (E1) angeordnet ist, wobei die Schaltung umfasst:
- ein Diodenelement (24), das einen oder mehrere parallel geschaltete Halbleiterschalter (34) beinhaltet, wobei das Diodenelement (24) die Funktion einer Diode erfüllt und Stromdurchfluss durch das Diodenelement (24) nur in einer Richtung ermöglicht;
- eine Kontroll- und Steuerschaltung (33), welche die Stärke eines durch das Diodenelement (24) fließenden Stroms bestimmt und entsprechend der bestimmten Stromstärke den oder die Halbleiterschalter (34) des Diodenelements (24) steuert; und
- einen mit dem Diodenelement (24) elektrisch verbundenen und dem Bordnetz (10) elektrisch verbindbaren zweiten Energiespeicher (E2), **dadurch gekennzeichnet, dass**
- die Kontroll- und Steuerschaltung (33) dafür ausgelegt ist, den oder die Halbleiterschalter (34) derart anzusteuern, dass dieser oder diese einen Stromfluss in Richtung von dem ersten Energiespeicher (E1) in das Bordnetz (10) zulässt oder zulassen, in der Gegenrichtung jedoch sperrt oder sperren, und
- das Diodenelement (24) ferner eine parallel zu dem oder den Halbleiterschaltern (34) geschaltete Diode (32) umfasst, wobei
- der oder die Halbleiterschalter (34) des Diodenelements (24) ein Feldeffekttransistor oder Feldeffekttransistoren ist oder sind.

2. Schaltung nach Anspruch 1, bei der die Diode (32) eine Schottky-Diode ist.

3. Schaltung nach Anspruch 1 oder 2, bei welcher der zweite Energiespeicher (E2) eine über eine Schalteinheit angeschlossene Batterie ist.

4. Schaltung nach Anspruch 3, bei der die Schalteinheit zwei gegensinnig in Serie geschaltete Halbleiterschalter (28, 30), vorzugsweise Feldeffekttransistoren, umfasst.

5. Schaltung nach Anspruch 4, bei der die Schalteinheit ferner einen Mikro-Controller (26) zur Steuerung der Halbleiterschalter (28, 30) der Schalteinheit umfasst.

6. Schaltung nach Anspruch 5, bei welcher der Mikro-Controller (26) ferner eine Einrichtung oder Funktionalität zur Überwachung der Temperatur (27) des oder der Halbleiterschalter des Diodenelements aufweist.

7. Schaltung nach einem der Ansprüche 3 bis 6, die ferner eine Einrichtung (22) zur Überprüfung des Ladezustands der Batterie, insbesondere eine Einrichtung zur Messung der Impedanz der Batterie, umfasst.

8. Schaltung nach Anspruch 1 oder 2, bei welcher der zweite Energiespeicher (E2) ein Super-Kondensator (40; Super-Cap) ist.

9. Schaltung nach einem der vorhergehenden Ansprüche, bei der der oder die Halbleiterschalter (34) des Diodenelements (24) ein Metall-Oxid-Halbleiter-Feldeffekttransistor oder Metall-Oxid-Halbleiter-Feldeffekttransistoren ist oder sind.

10. Schaltung nach einem der vorhergehenden Ansprüche, wobei die Schaltung in elektrischer Verbindung zwischen dem zu stabilisierenden Bordnetz (10) und einem oder mehreren mit dem ersten Energiespeicher (E1) verbundenen Hochstromverbrauchern angeordnet ist.

11. Schaltung nach Anspruch 10, bei der einer der Hochstromverbraucher eine Start-Stopp-Funktion oder ein EPS-System (EPS; Servolenkung) oder eine elektrohydraulische Bremse ist.

12. Kraftfahrzeug, insbesondere Automobil, das eine Schaltung nach einem der vorhergehenden Ansprüche aufweist.

## Claims

1. Circuit (20, 50) for stabilising the voltage of a vehicle's electrical system (10), in particular for motor vehicles, which is electrically connected between the vehicle's electrical system to be stabilised and a first energy storage device (E1), the circuit comprising:
- a diode element (24) which contains one or more parallel-connected semiconductor switches (34), wherein the diode element (24) performs the function of a diode and enables current flow through the diode element (24) in one direction only;
- a monitoring and control circuit (33) which determines the intensity of a current flowing through the diode element (24) and, according to the current intensity determined, controls the semiconductor switch or switches (34) of the diode element (24); and
- a second energy storage device (E2) which is electrically connected to the diode element (24) and can be electrically connected to the vehicle's electrical system (10), **characterised in that**
- the monitoring and control circuit (33) is designed to drive the semiconductor switch or switches (34) in such a way that it or they admit(s) current flow in the direction from the first energy storage device (E1) to the vehicle's electrical system (10), but block(s) it in the opposite direction, and
- the diode element (24) further comprises a diode (32) connected in parallel with the semiconductor switch or switches (34), wherein
- the semiconductor switch or switches (34) of the diode element (24) is/are a field effect transistor or transistors.

2. Circuit according to claim 1, in which the diode (32) is a Schottky diode.

3. Circuit according to claim 1 or 2, in which the second energy storage device (E2) is a battery connected via a switching unit.

4. Circuit according to claim 3, in which the switching unit comprises two semiconductor switches (28, 30) connected in series in opposite directions, preferably field effect transistors.

5. Circuit according to claim 4, in which the switching unit further comprises a microcontroller (26) for controlling the semiconductor switches (28, 30) of the switching unit.

6. Circuit according to claim 5, in which the microcontroller (26) further has a device or function for monitoring the temperature (27) of the semiconductor switch or switches of the diode element.

7. Circuit according to any of claims 3 to 6, which further comprises a device (22) for checking the state of charge of the battery, in particular a device for measuring the impedance of the battery.

8. Circuit according to claim 1 or 2, in which the second energy storage device (E2) is a super-capacitor (40; super-cap).

9. Circuit according to any of the preceding claims, in which the semiconductor switch or switches (34) of the diode element (24) is/are a metal oxide semiconductor field effect transistor or transistors.

10. Circuit according to any of the preceding claims, wherein the circuit is electrically connected between the vehicle's electrical system (10) to be stabilised and one or more high-current loads connected to the first energy storage device (E1).

11. Circuit according to claim 10, in which one of the high-current loads is a start/stop function or an EPS system (EPS; power steering) or an electrohydraulic brake.

12. Motor vehicle, in particular automobile, which has a circuit according to any of the preceding claims.

## Revendications

1. Circuit (20, 50) pour stabiliser la tension d'un réseau de bord (10), en particulier pour véhicules à moteur, qui est agencé en connexion électrique entre le réseau de bord à stabiliser et un premier accumulateur d'énergie (E1), le circuit comprenant :
- un élément de diode (24) qui contient un ou plusieurs commutateurs à semi-conducteurs (34) montés en parallèle, l'élément de diode (24) remplissant la fonction d'une diode et permettant une circulation de courant à travers l'élément de diode (24) uniquement dans un sens ;
- un circuit de commande et de contrôle (33) qui détermine l'intensité d'un courant traversant l'élément de diode (24) et qui, en fonction de l'intensité du courant déterminée, commande le ou les commutateurs à semi-conducteurs (34) de l'élément de diode (24) ; et
- un second accumulateur d'énergie (E2) connecté électriquement à l'élément de diode (24) et pouvant être connecté électriquement au réseau de bord (10), **caractérisé en ce que** :
- le circuit de commande et de contrôle (33) est configuré pour commander le ou les commutateurs à semi-conducteurs (34) de sorte que celui-ci ou ceux-ci laisse ou laissent passer un flux de courant en direction du premier accumulateur d'énergie (E1) dans le réseau de bord (10), mais l'arrête ou l'arrêtent dans le sens opposé, et
- l'élément de diode (24) comprend en outre une diode (32) montée en parallèle avec le ou les commutateurs à semi-conducteurs (34),
- le ou les commutateurs à semi-conducteurs (34) de l'élément de diode (24) est ou sont un transistor à effet de champ ou des transistors à effet de champ.

2. Circuit selon la revendication 1, dans lequel la diode (32) est une diode Schottky.

3. Circuit selon la revendication 1 ou 2, dans lequel le second accumulateur d'énergie (E2) est une batterie connectée via une unité de commutation.

4. Circuit selon la revendication 3, dans lequel l'unité de commutation comprend deux commutateurs à semi-conducteurs (28, 30) montés en série en sens inverse, de préférence des transistors à effet de champ.

5. Circuit selon la revendication 4, dans lequel l'unité de commutation comprend en outre un microcontrôleur (26) pour commander les commutateurs à semi-conducteurs (28, 30) de l'unité de commutation.

6. Circuit selon la revendication 5, dans lequel le microcontrôleur (26) comprend en outre un dispositif ou une fonctionnalité pour surveiller la température (27) du ou des commutateurs à semi-conducteurs de l'élément de diode.

7. Circuit selon l'une quelconque des revendications 3 à 6, comprenant en outre un dispositif (22) pour surveiller l'état de charge de la batterie, en particulier un dispositif pour mesurer l'impédance de la batterie.

8. Circuit selon la revendication 1 ou 2, dans lequel le second accumulateur d'énergie (E2) est un super-condensateur (40 ; Super-Cap).

9. Circuit selon l'une quelconque des revendications précédentes, dans lequel le ou les commutateurs à semi-conducteurs (34) de l'élément de diode (24) est un transistor à effet de champ à semi-conducteurs d'oxydes métalliques ou sont des transistors à effet de champ à semi-conducteurs d'oxydes métalliques.

10. Circuit selon l'une quelconque des revendications précédentes, le circuit étant agencé en connexion électrique entre le réseau de bord (10) à stabiliser et un ou plusieurs consommateurs de courant fort connectés au premier accumulateur d'énergie (E1).

11. Circuit selon la revendication 10, dans lequel un des consommateurs de courant fort est une fonction marche/arrêt ou un système EPS (EPS ; Direction assistée) ou un frein électrohydraulique.

12. Véhicule à moteur, en particulier automobile, qui comprend un circuit selon l'une quelconque des revendications précédentes.
